# EUROPEAN PATENT APPLICATION

(11) **EP 4 570 657 A1**
(43) Date of publication of application: **18.06.2025**
(21) Application number: 23216878.1
(22) Date of filing: 14.12.2023
(51) Int. Cl.: B64D 11/04, B64D 11/00

(54) **A PORTABLE INSERT**

(71) Applicant: B/E Aerospace, Inc., Winston Salem, NC 27105 (US)
(72) Inventor: NEGRE, Ergen Sawit, Sto. Tomas (PH); NEGRE, Richebelle Salinas, Pasig City (PH); LALUNIO, Ezra Ellaine A, Lipa city (PH); NEMES, Mary Claire Valencia, Calamba (PH)
(74) Representative: Dehns

(57) **Abstract**

An portable insert for an aircraft removable from an aircraft galley, the portable insert comprising an energy storage; a receiving portion configured to receive a food and/or beverage; and a heater, wherein the energy storage is configured to supply power to the heater to heat the food and/or beverage when the galley insert has been removed from the aircraft galley.

## Description

### Technical Field

This disclosure relates to a portable insert, an aircraft galley insert and a method for heating a food and/or beverage on an aircraft.

### Background

Traditionally, trolleys are used on an aircraft to distribute hot food and/or beverages to passengers in the aircraft cabin, after the items have been prepared in an aircraft galley. Due to the time required to transport food and/or beverage items with the trolley, the food and/or beverages may cool from an optimum temperature before they can be distributed to all of the passengers.

### Summary

According to first aspect, there is provided a portable insert for an aircraft, the portable insert removable from an aircraft galley, the portable insert comprising an energy storage; a receiving portion configured to receive a food and/or beverage; and a heater, wherein the energy storage is configured to supply power to the heater to heat the food and/or beverage when the galley insert has been removed from the aircraft galley.

The receiving portion may be configured to receive a serving container to receive the food and/or beverage.

As the portable insert can be used for heating when removed from the aircraft galley, it is possible to maintain food and/or beverages at a higher temperature for a longer period of time, meaning a greater number of passengers can receive items at a desirable temperature. The portable insert also allows food and/or beverage items to be heated from cold upon request by a passenger, without the use of the aircraft galley, which may reduce waste of food and/or beverages.

The portable insert may further comprise the serving container received by the receiving portion.

The portable insert may further comprise a control button, the control button actuatable to activate the heater.

The portable insert may further comprise comprises a power input, the power input configured to receive power from an aircraft galley power output and supply power to the energy storage.

The portable insert may further comprise comprises a waste port, the waste port configured to fluidly connect to an aircraft galley drain and transfer waste from the portable insert to the aircraft galley drain.

The portable insert may further comprise a power output, the power output configured to supply power from the energy storage to an external device.

The portable insert may further comprise a handle.

The handle may be usable to remove the portable insert from the aircraft galley.

The handle may be usable to carry the portable insert.

The handle is movable between a first position and a second position, wherein the handle in the first position is usable for removing the portable insert from the aircraft galley insert, and the handle in the second position is usable for carrying the portable insert.

As the handle can be used for both removal and carrying, this eliminates the need for two separate components to serve these purposes, therefore saving space in the portable insert design and allowing for a reduced overall weight.

The portable insert may further comprise a track, wherein moving the handle between the first position and second position comprises moving the handle along the track.

Moving the handle from the first position to the second position may comprise moving the handle across a front face of the portable insert.

Moving the handle from the first position to the second position comprises moving the handle across a top face of the portable insert.

The handle may be configured to be extendable when in the first position.

The handle may be configured to be extendable when in the second position.

The handle may be configured to lock in place when extended in the second position.

The handle in the second position may be located substantially above a centre of gravity of the portable insert, such that a bottom surface of the receiving portion is substantially horizontal in use.

The energy storage may be positioned substantially below the handle when the handle is in the second position.

The receiving portion may be positioned substantially below the handle when the handle is in the second position.

The portable insert may be receivable by an aircraft galley insert.

The portable insert may be configured to be inserted or removed from the aircraft galley insert in a lateral direction, the lateral direction perpendicular to a front face of the aircraft galley insert.

The portable insert may be configured to be slidable out of an aircraft galley.

According to a second aspect, there is provided an aircraft galley insert comprising the portable insert of the first embodiment.

According to a third aspect, there is provided an aircraft galley comprising the aircraft galley insert of the second embodiment, or the portable insert of the first embodiment.

According to a fourth aspect, there is provided an aircraft comprising the aircraft galley of the third embodiment.

According to a fifth aspect, there is provided a method for heating a food and/or beverage on an aircraft, comprising: removing a portable insert from an aircraft galley, wherein the portable insert comprises an energy storage, a receiving portion and a heater; receiving, by the receiving portion, the food and/or beverage; and heating the receiving portion by supplying power to the heater from the energy storage to heat the food and/or beverage.

The method of the fifth aspect may comprise any of the features or functional steps described in relation to the first aspect. Any of the second to fourth aspects may comprise any features described in relation to the first aspect.

### Brief Description of the Drawings

Various examples will now be described, by way of example only, and with reference to the accompanying drawings, in which:
Fig. 1 shows a cross sectional view of a portable insert comprising a handle;
Fig. 2 shows a perspective view of the portable insert of Fig. 1;
Fig. 3 shows a cross sectional view of an aircraft galley insert comprising the portable insert of Fig. 1;
Fig. 4 shows a cross sectional view of the portable insert of Fig. 1, wherein the handle is shown in multiple locations between a first position and a second position; and
Fig. 5a to 5d show a perspective view of the aircraft galley in Fig. 1, wherein the handle is shown in a number of positions selected from those shown in Fig. 4.

### Detailed Description

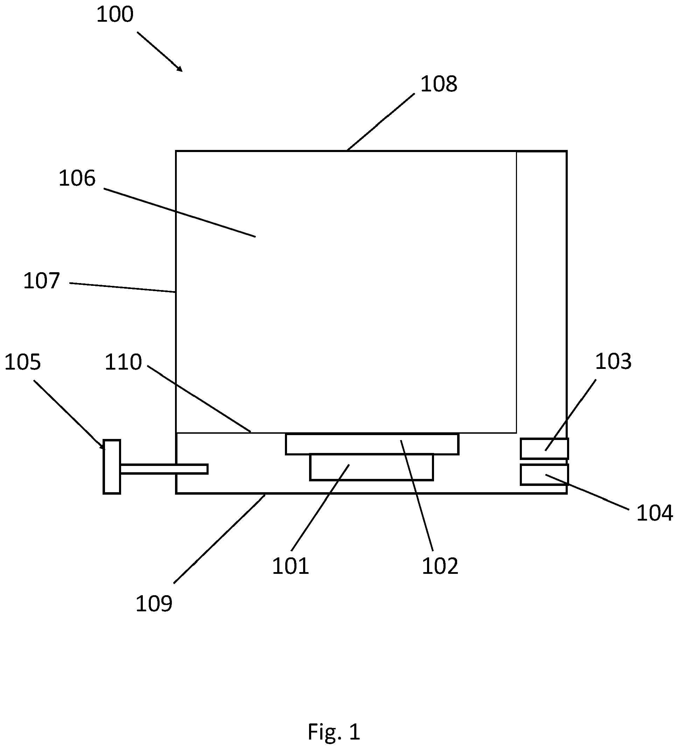

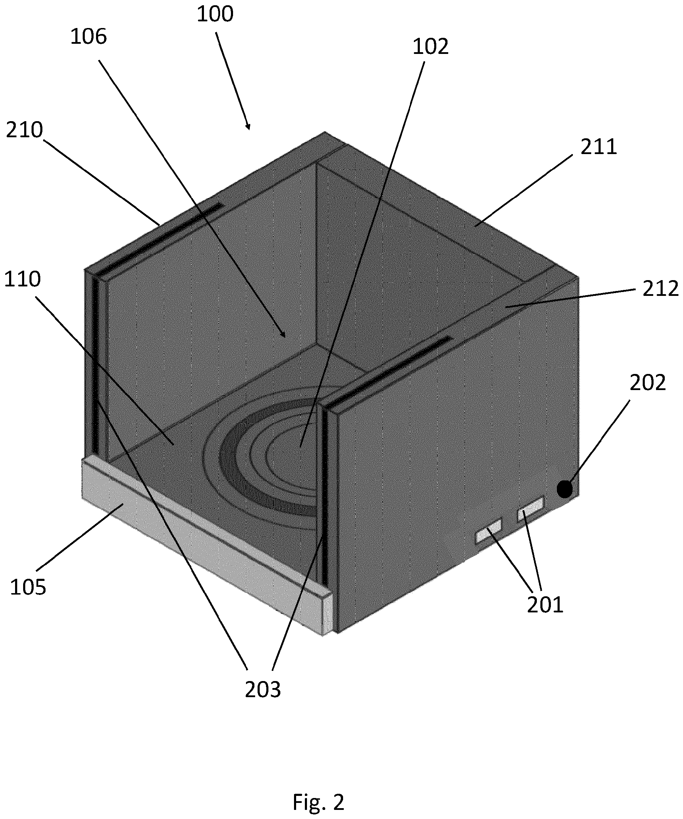

Referring to Fig. 1 and Fig. 2, a portable insert 100 for an aircraft is shown. The portable insert 100 comprises an energy storage 101, a heater 102, a power input 103, a wastewater port 104, a handle 105, a receiving portion 106, a front face 107, a top face 108, a bottom face 109, power outputs 201, a control button 202 and a track 203.

The portable insert 100 has a substantially cuboidal shape, wherein the front face 107 and the top face 108 of the portable insert 100 are substantially open to permit access to the receiving portion 106.

The receiving portion 106 comprises a bottom surface 110, a first side wall 210, a back wall 211 and a second side wall 212. The receiving portion 106 further comprises an internal volume between the first side wall 210, the back wall 211, the second side wall 212, the bottom surface 110, the front face 107 and the top face 108. The receiving portion 106 is configured to receive a serving container (not shown in the figures), wherein the serving container contains a food and/or beverage. The receiving portion 106 is therefore configured to receive a food and/or beverage.

The energy storage 101 is positioned between the bottom face 109 of the portable insert 100 and the bottom surface 110 of the receiving portion 106. The energy storage 101 may be a battery.

In this embodiment, the heater 102 is a heating pad 102. The heating pad 102 forms part of the bottom surface 110 of the receiving portion 106. In other embodiments, the heater 102 may be positioned between the energy storage 101 and the bottom surface 110 of the receiving portion 106.

The heating pad 102 is configured to heat the food and/or beverage received by the receiving portion 106. This is achieved by the heating pad 102 transferring heat energy to the serving container received by the receiving portion 106. Heat energy may be produced via resistive heating or inductive heating when power is supplied to the heating pad 102. Heat is transferred to the serving container via conduction. In other embodiments, heat may be transferred to the serving container via induction if a suitable serving container is used.

The energy storage 101 is electronically connected to the heating pad 102, such that the energy storage 101 is configured to supply power to the heating pad 102. The energy storage 101 is also electronically connected to the power input 103, such that the power input 103 is configured to supply power to the energy storage 101 to charge the energy storage 101.

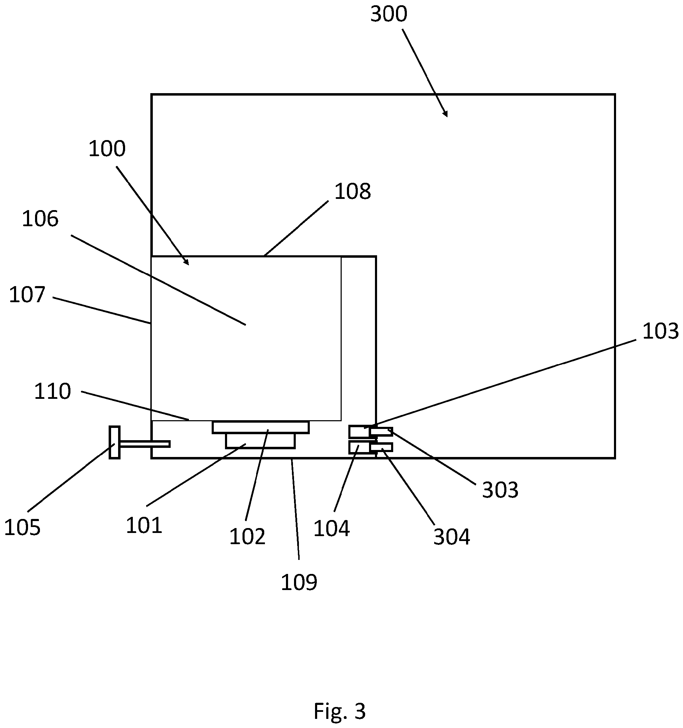

The power input 103 and waste port 104 are positioned at an edge of the portable insert 100, such that they can make direct contact with complementary components when the portable insert 100 is inserted into an aircraft galley insert 300 (see Fig. 3). The aircraft galley insert 300 may, for example, be a beverage making unit, a hot water dispenser or another kitchen appliance.

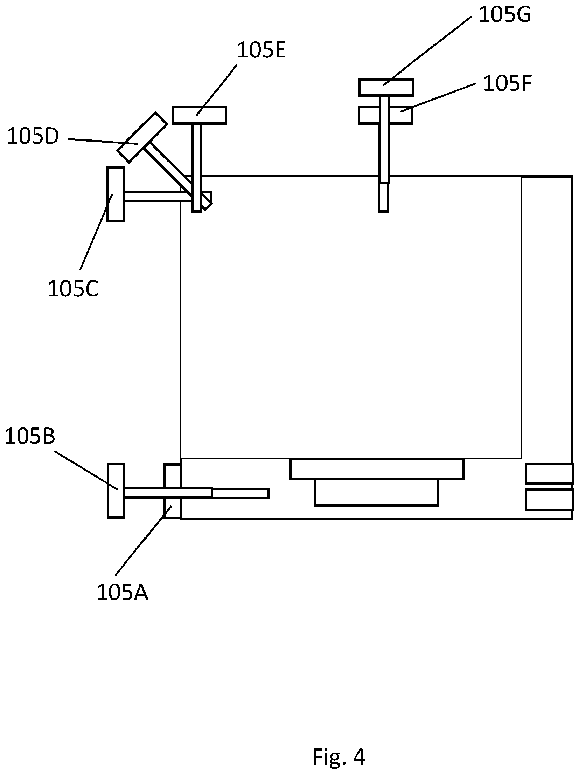

The handle 105 protrudes from the front face 107 of the portable insert 100 when in a first position 105A 105B and protrudes from the top face 108 of the portable insert 100 when in a second position 105F 105G (see Fig. 4 for details regarding movement of the handle 105). The energy storage 101 is positioned substantially below the handle 105 when the handle 105 is in the second position 105F 105G. The receiving portion 106 is positioned substantially below the handle 106 when the handle 106 is in the second position 105F 105G. The handle 105, a centre (e.g. centre of volume or mass) of the energy storage 101 and a centre (e.g. centre of volume or mass, which may include the volume or mass of food or beverage and/or the serving container) of the receiving portion 106 may therefore be substantially aligned along an axis when the handle 105 is in the second position 105F 105G.

The power outputs 201 are positioned on an external surface of the portable insert 100 and are electronically connected to the energy storage 101. The power outputs 201 are configured to supply power from the energy storage 101 to an external device (not shown in the figures) when an external device is connected to the power output 201.

The control button 202 is positioned on an external surface of the portable insert 100, such that it is accessible to a user when the portable insert 100 is not inserted into the aircraft galley insert 300. The control button is configured to be actuatable to activate the heater 102.

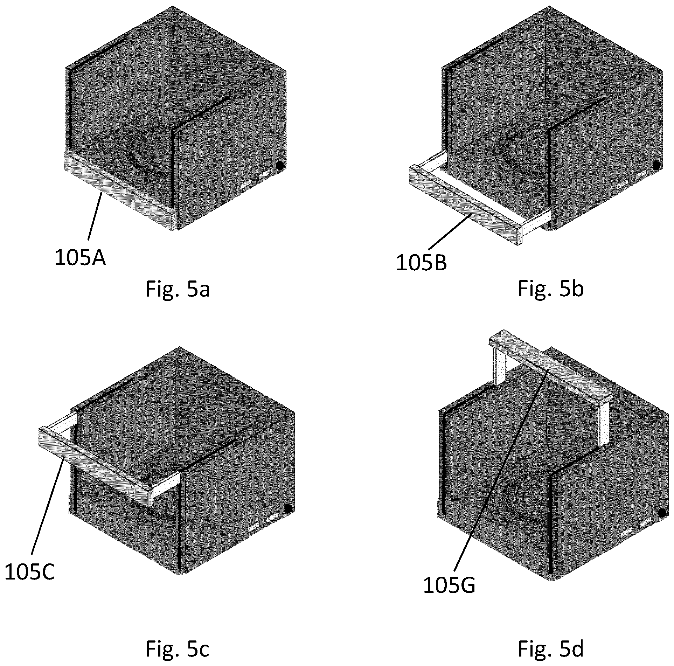

The track 203 is formed of two continuous openings located in the first side wall 210 and the second side wall 212 of the portable insert 100. The openings 203 extend along the front face 107 and along a portion of the top face 108. The track 203 is configured to retain the handle 105, such that the handle 105 is movable along the track 203 from the first position 105A 105B to the second position 105F 105G (see Fig. 4 and Fig. 5). Moving the handle 105 from the first position 105A 105B to the second position 105F 105G comprises moving the handle 105 along the track 203. The track 203 is also configured such that the handle 105 is extendable when the handle 105 is located in specific positions (see Fig. 4 and description below).

Referring to Fig. 3, a cross section of an aircraft galley insert 300 comprising the portable insert 100 of Fig. 1 is shown. The aircraft galley insert 300 further comprises an aircraft galley power output 303 and an aircraft galley drain 304.

The aircraft galley insert 300 is configured to receive the portable insert 100, such that the portable insert 100 is slidable in and out of the aircraft galley insert 300. The portable insert 100 is receivable by the aircraft galley insert 300. In the embodiment shown, the portable insert 100 is configured to be inserted or removed from the aircraft galley insert 300 in a lateral direction, wherein the lateral direction is perpendicular to a front face of the aircraft galley insert 300 and the aircraft galley.

In this embodiment, the aircraft galley power output 303 is positioned such that the aircraft power output 303 makes direct contact with the power input 103 when the portable insert 100 is inserted into the aircraft galley insert 300. The aircraft galley power output 303 is configured to be complimentary to the power input 103, such that the aircraft galley power output 303 is configured to electronically connect to the power input 103. The power input 103 is configured to receive power from the aircraft galley power output 303. The aircraft galley power output 303 is therefore configured to supply power to the energy storage 101 when the portable insert 100 is inserted into the aircraft galley insert 300. In alternative embodiments, the aircraft galley power output 303 may supply power to the energy storage 101 via different means, for example wirelessly, e.g. via wireless charging.

The aircraft galley drain 304 is positioned such that the aircraft galley drain 304 makes direct contact with the waste port 104 when the portable insert 100 is inserted into the aircraft galley insert 300. The waste port 104 is configured to fluidly connect to the aircraft galley drain 304 and transfer waste from the portable insert 100 to the aircraft galley drain 304 when fluidly connected. When the portable insert 100 is not inserted into the aircraft galley insert 300, waste may accumulate in the receiving portion 106 on the bottom surface 110. The waste may comprise any food and/or beverage which has been spilt from the serving container received in the receiving portion 106. When the portable insert 100 is inserted into the aircraft galley insert 300, any waste in the collecting portion is transferred to the aircraft galley drain 304 via the waste port 104.

Referring to Fig. 4 and Fig. 5, the movement of the handle 105 across the front face 107 and top face 108 of the portable insert 100 is shown. Some reference numerals are omitted from these figures in order to maintain clarity.

The handle 105 is movable between a first position 105A 105B and a second position 105F 105G, wherein the handle 105 in the first position 105A 105B is usable for removing the portable insert 100 from the aircraft galley insert 300, and the handle 105 in the second position 105F 105G is usable for carrying the portable insert 100. The movement of the handle 105 between the first position 105A 105B and the second position 105F 105G comprises the handle 105 moving through a first intermediate position 105C, a second intermediate position 105D and a third intermediate position 105E. Moving the handle from the first position 105A 105B to the second position 105F 105G comprises moving the handle across the front face 107 of the portable insert 100 and moving the handle across the top face 108 of the portable insert 100.

The handle in the first position 105A 105B is located on the front face 107 and positioned towards an edge joining the front face 107 and bottom face 109 of the portable insert 100, towards the bottom of the galley insert 100. The first position 105A 105B comprises a retracted first position 105A and an extended first position 105B. This is because the handle 105 is configured to be extendable when in the first position 105A 105B. This means the handle 105 in the first position 105A 105B is configured to be movable outward away from the portable insert 100 in the lateral direction, whilst being retained by the track 203. In the extended first position 105B, a user is able to grip the handle and pull to remove the portable insert 100 from the aircraft galley insert 300. In alternative embodiments, the handle in the extended first position 105B may be used to remove the portable insert 100 from the aircraft galley insert 300 in a different direction.

The handle 105 in the second position 105F 105G is located on the top face 108 of the portable insert 100. The handle 105 in the second position 105F 105G is located substantially above a centre of gravity of the portable insert 100, such that the bottom surface 110 of the receiving portion 106 is substantially horizontal in use. The second position 105F 105G comprises an initial second position 105F and an extended second position 105G, wherein the handle extends vertically away from the top face 108 when moving from the initial second position 105F to the extended second position 105G. This is because the handle 105 is configured to be extendable when in the second position 105F 105G. The handle 105 is also configured to lock in place when extended in the second position 105G, thereby allowing the user to carry the portable insert 100 using the handle 105. This locking effect may be achieved using a mechanism located within the track 203.

Starting from the extended first position 105B, the handle 105 is movable along the front face 107 of the portable insert 100 to reach the first intermediate position 105C. The handle 105 in the first intermediate position 105C is located on the front face 107 and positioned towards an edge joining the front face 107 and the top face 108. The handle 105 in the first intermediate position 105C protrudes from the front face 107 in the lateral direction (e.g. outwardly from the front of the aircraft galley). The handle 105 and track 203 are configured to allow the handle 105 to rotate about an axis located in the track 203 when the handle 105 is located at the first intermediate position 105C. The axis extends in a direction parallel to the edge joining the front face 107 and top face 108 (e.g. in a horizontal direction (defined with respect to the aircraft) that is parallel to a front surface of the aircraft galley). During rotation, the handle 105 passes through the second intermediate position 105D. At the second intermediate position 105D, the handle 105 is positioned at an approximately 45 degree angle relative to both the front face 107 and the top face 108. After a substantially 90 degree rotation from the first intermediate position 105C, the handle 105 moves into the third intermediate position 105E. The handle 105 in the third intermediate position 105E is located on the top face 108 towards the edge joining the front face 107 and top face 108. The handle 105 in the third intermediate position 105E protrudes from the top face 108 in a vertical direction, wherein the vertical direction is substantially perpendicular to the lateral direction. From the third intermediate position 105E, the handle 105 is movable along the top face 108 to reach the initial second position 105F.

Various aspects disclosed in the various examples may be used alone, in combination, or in a variety of arrangements not specifically discussed in the examples described in the foregoing and this disclosure is therefore not limited in its application to the details and arrangement of components set forth in the foregoing description or illustrated in the drawings. For example, aspects described in one example may be combined in any manner with aspects described in other examples. Although particular examples have been shown and described, it will be obvious to those skilled in the art that changes and modifications may be made without departing from the invention in its broader aspects. The scope of the following claims should not be limited by the examples set forth in the examples, but should be given the broadest reasonable interpretation consistent with the description as a whole.

## Claims

1. A portable insert for an aircraft, the portable insert removable from an aircraft galley, the portable insert comprising:
an energy storage;
a receiving portion configured to receive a food and/or beverage; and
a heater,
wherein the energy storage is configured to supply power to the heater to heat the food and/or beverage when the galley insert has been removed from the aircraft galley.

2. The portable insert of claim 1, wherein the receiving portion is configured to receive a serving container to receive the food and/or beverage.

3. The portable insert of claim 2, wherein the portable insert further comprises the serving container received by the receiving portion.

4. The portable insert of any preceding claim, wherein the portable insert further comprises a power input, the power input configured to receive power from an aircraft galley power output and supply power to the energy storage.

5. The portable insert of any preceding claim, wherein the portable insert further comprises a waste port, the waste port configured to fluidly connect to an aircraft galley drain and transfer waste from the portable insert to the aircraft galley drain.

6. The portable insert of any preceding claim, wherein the portable insert further comprises a power output, the power output configured to supply power from the energy storage to an external device.

7. The portable insert of any preceding claim, wherein the portable insert further comprises a handle.

8. The portable insert of claim 7, wherein the handle is usable to remove the portable insert from the aircraft galley.

9. The portable insert of claims 7 or 8, wherein the handle is usable to carry the portable insert.

10. The portable insert of claim 9 when dependent on claim 8, wherein the handle is movable between a first position and a second position, wherein the handle in the first position is usable for removing the portable insert from the aircraft galley, and the handle in the second position is usable for carrying the portable insert.

11. The portable insert of claims 10, wherein the portable insert further comprises a track, wherein moving the handle between the first position and second position comprises moving the handle along the track.

12. The portable insert of claims 7 to 11, wherein the handle in the second position is located substantially above a centre of gravity of the portable insert, such that a bottom surface of the receiving portion is substantially horizontal in use.

13. An aircraft galley insert comprising the portable insert of claims 1 to 13.

14. An aircraft galley comprising the aircraft galley insert of claim 13 or the portable insert of claims 1 to 12.

15. A method for heating a food and/or beverage on an aircraft, comprising:
removing a portable insert from an aircraft galley, wherein the portable insert comprises an energy storage, a receiving portion and a heater;
receiving, by the receiving portion, the food and/or beverage; and
heating the receiving portion by supplying power to the heater from the energy storage to heat the food and/or beverage.
